# EUROPÄISCHE PATENTANMELDUNG

(11) **EP 0 856 430 A1**
(43) Veröffentlichungstag der Anmeldung: **05.08.1998**
(21) Anmeldenummer: 97101519.3
(22) Anmeldetag: 31.01.1997
(51) Int. Cl.: B60Q 1/00, B60Q 1/50, B60Q 1/52

(54) **Auffahrwarnsystem für Fahrzeuge**

(71) Anmelder: Hartl, Lorenz, 83071 Stephanskirchen (DE)
(72) Erfinder: Hartl, Lorenz, 83071 Stephanskirchen (DE)
(74) Vertreter: Bauer, Friedrich, Dipl.-Ing.

(57) **Zusammenfassung**

Bei einem Auffahrwarnsystem für Fahrzeuge ist im Heckbereich des Fahrzeugs (1) an einer von einem Folgefahrzeug (3) aus gut sichtbaren Stelle angeordnete alphanumerische Anzeigeeinrichtung vorgesehen, die durch ein vom Fahrer betätigbares Schaltglied derart aktiviert wird, daß dem Fahrer des Folgefahrzeugs (3) eine Textmitteilung angezeigt wird.

## Beschreibung

Die Erfindung betrifft ein Auffahrwarnsystem für Fahrzeuge gemäß dem Oberbegriff des Anspruches 1.

Im Straßenverkehr besteht häufig das Problem, daß Fahrzeuge den für eine bestimmte Geschwindigkeit erforderlichen Abstand zum vorausfahrenden Fahrzeug nicht einhalten und zu nahe auffahren. Dies kann insbesondere bei höheren Geschwindigkeiten den Fahrer des vorausfahrenden Fahrzeugs verunsichern und zu unüberlegten, überhasteten Reaktionen verleiten. Beispielsweise kann sich ein vorausfahrender Fahrer genötigt sehen, ebenfalls wesentlich schneller zu fahren, als er eigentlich möchte und es seinem Fahrkönnen und den Umgebungsbedingungen angemessen wäre. Ein weiteres Beispiel ist die Situation auf Autobahnen, wo sich ein auf der Überholspur befindender Fahrer aufgrund eines dicht auffahrenden Folgefahrzeugs genötigt sieht, möglichst schnell wieder von der Überholspur auf die Normalspur zu wechseln, wobei dann leicht andere nebenherfahrende Fahrzeuge auf der Normalspur übersehen werden. Hierdurch können insbesondere bei hohen Geschwindigkeiten schwere Unfälle provoziert werden. Darüber hinaus besteht selbstverständlich die Gefahr, daß bei zu geringem Abstand der Bremsweg für das Folgefahrzeug nicht ausreicht, um bei einem starken Abbremsen des vorausfahrenden Fahrzeugs einen Auffahrunfall zu vermeiden.

Der Erfindung liegt die Aufgabe zugrunde, ein Auffahrwarnsystem für Fahrzeuge zu schaffen, mit dem auf wirksame Weise die Häufigkeit eines zu nahen Auffahrens eines Folgefahrzeugs verringert werden kann.

Diese Aufgabe wird erfindungsgemäß durch die Merkmale des Anspruches 1 gelöst. Vorteilhafte Ausführungsformen sind in den weiteren Ansprüchen beschrieben.

Das erfindungsgemäße Auffahrwarnsystem für Fahrzeuge weist eine im Heckbereich des Fahrzeugs an einer von einem Folgefahrzeug aus gut sichtbaren Stelle angeordnete alphanumerische Anzeigeeinrichtung auf, die durch ein vom Fahrer betätigbares Schaltglied derart aktivierbar ist, daß dem Fahrer des Folgefahrzeugs eine Textmitteilung angezeigt wird.

Erkennt der Fahrer, daß das Folgefahrzeug zu nahe auffährt, kann durch Betätigen des Schaltglieds, beispielsweise durch Drücken eines Druckknopfes, die im Heck angeordnete alphanumerische Anzeigeeinrichtung derart aktiviert werden, daß beispielsweise der Text "Bitte Abstand halten!" angezeigt wird. Die Anzeigeeinrichtung ermöglicht somit ein "Kommunizieren" mit dem Fahrer des Folgefahrzeugs, d. h. die Übermittlung einer ganz bestimmten Information. Da der Fahrer des Folgefahrzeugs direkt "angesprochen" wird, ist der Warneffekt entsprechend hoch.

Vorteilhafterweise umfaßt die Textmitteilung einen vorProgrammierten Text oder auch mehrere vorprogrammierte Texte, die vom Fahrer auf Knopfdruck ausgelöst werden können. Beispielsweise ist es möglich, bei Nichtbefolgung des Hinweises "Abstand halten!" den weiteren Text "Sie werden fotografiert!" oder "Sie werden angezeigt! "anzuzeigen.

Die alphanumerische Anzeigeeinrichtung kann auch mit einer vom Fahrzeuginneren aus bedienbaren Eingabeeinrichtung verbunden sein, mit der die Textmitteilung variierbar ist. Mit Hilfe einer derartigen variierbaren Eingabeeinrichtung könnten verschiedenste Mitteilungen für das Folgefahrzeug angezeigte werden, beispielsweise "nächste Ausfahrt ausfahren!" etc.

Vorteilhafterweise besteht das Schaltglied aus einem im Bereich des Armaturenbretts oder Lenkrads angeordneten Druckknopfschalter, der vom Fahrer erreichbar ist, ohne seine Sitzposition ändern zu müssen.

Zusätzlich zur alphanumerischen Anzeigeeinrichtung kann im Heckbereich des Fahrzeugs eine nach hinten auf ein Folgefahrzeug zielende Fotografiereinrichtung angeordnet sein, die mittels eines in Reichweite des Fahrers vorgesehenen Betätigungsglieds auslösbar ist. Sollte die Warnung auf der alphanumerischen Anzeigeeinrichtung erfolglos bleiben, kann das Folgefahrzeug und insbesondere dessen Kennzeichen fotografisch festgehalten werden, um den Abstand zu dokumentieren.

Zusätzlich kann die alphanumerische Anzeigeeinrichtung und/oder Fotografiereinrichtung mit einem im Heckbereich des Fahrzeugs angeordneten, nach hinten auf ein Folgefahrzeug gerichteten Entfernungsmeßeinrichtung zur Messung des Abstandes zwischen dem Fahrzeug und dem Folgefahrzeug und mit einem elektronischen Rechner verbunden sein. Dieser elektronische Rechner aktiviert die Anzeigeeinrichtung und/oder Fotografiereinrichtung, wenn der von der Entfernungsmeßeinrichtung gemessene Abstand zum Folgefahrzeug einen bestimmten Sollwert unterschreitet.

Vorzugsweise kann zwischen dem manuellen Auslösen der alphanumerischen Anzeigeeinrichtung und/oder Fotografiereinrichtung und dem automatischen Auslösen durch den Rechner und die Entfernungsmeßeinrichtung umgeschaltet werden.

Die Erfindung wird nachfolgend anhand der Zeichnungen beispielshaft näher erläutert. In diesen zeigen:
- Figur 1 :: eine Rückansicht eines Fahrzeugs mit einem erfindungsgemäßen Auffahrwarnsystem, und
- Figur 2 :: eine Seitenansicht des in Figur 1 gezeigten Fahrzeugs und eines Folgefahrzeugs.

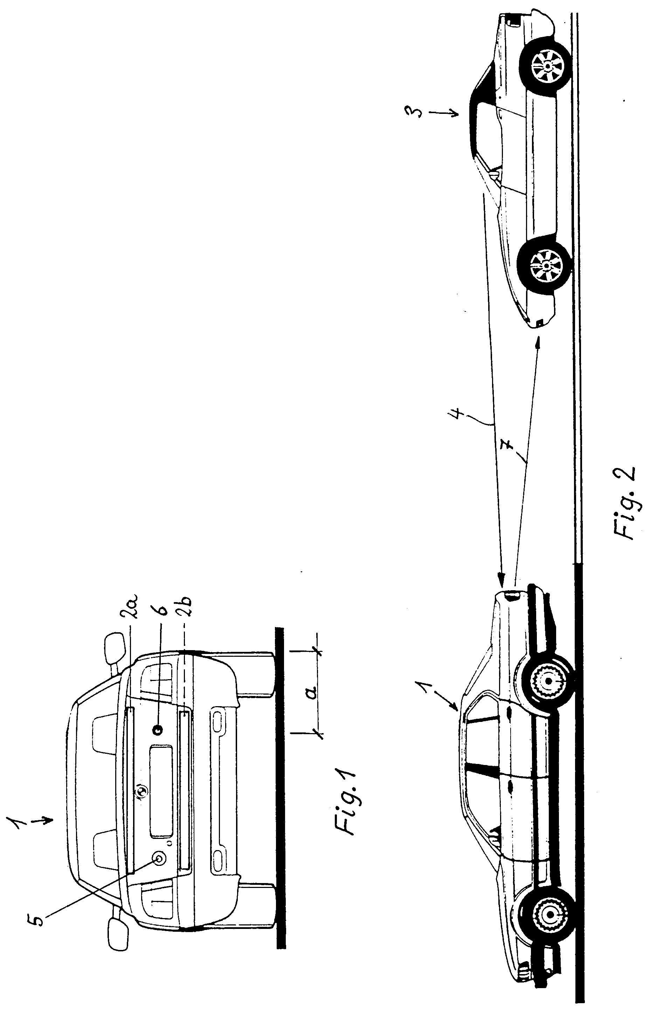

Aus den Figuren 1 und 2 ist ein Fahrzeug 1 ersichtlich, das in seinem Heckbereich eine alphanumerische Anzeigeeinrichtung aufweist, die aus zwei horizontalen, zueinander vertikal beabstandeten Anzeigebalken 2a, 2b besteht. Der obere Anzeigebalken 2a befindet sich im hinteren abfallenden Bereich des Kofferraumdeckels oberhalb des Nummernschildes und nimmt in etwa die gesamte Breite des Kofferraumdeckels ein. Der untere Anzeigebalken 2b ist an einer geeigneten Stelle unterhalb des Nummernschildes angebracht und kann sich beispielsweise unmittelbar oberhalb der Stoßstange befinden. Es ist ohne weiteres möglich, lediglich einen Anzeigebalken 2a oder 2b vorzusehen. In jedem Fall ist die alphanumerische Anzeigeeinrichtung 2a, 2b derart angeordnet und dimensioniert, daß sie von einem Folgefahrzeug 3 aus gut gesehen und gelesen werden kann, wenn dieses einen bestimmten Sicherheitsabstand unterschreitet. Der Sehstrahl des Fahrers zum oberen Anzeigebalken 2a ist mit einem Pfeil 4 dargestellt.

Bei der optischen Anzeigeeinrichtung 2a, 2b handelt es sich um Displays, die elektrisch bzw. elektronisch derart angesteuert werden, daß sie einen bestimmten Text darstellen. die Aktivierung der Anzeigeeinrichtung 2a, 2b erfolgt über einen nicht dargestellten Druckknopfschalter, der im Bereich des Armaturenbretts oder Lenkrads angeordnet und vom Fahrer betätigbar ist. Wird die Anzeigeeinrichtung 2a, 2b aktiviert, leuchtet ein bestimmter Text auf, beispielsweise
- bitte Abstand halten!
- Sie werden fotografiert!
- Sie werden angezeigt!

Die anzuzeigenden Texte können fest in einem Rechner einprogrammiert sein. Als Alternative ist es möglich, mittels eines nicht dargestellten Eingabegerätes, das beispielsweise vom Beifahrer bedient wird, einen individuellen Text einzugeben. Die individuelle Eingabe mittels eines Eingabegeräts bietet den Vorteil, daß unabhängig vom Problem der Abstandseinhaltung eine Nachrichtenübermittlung zum Folgefahrzeug 3 während der Fahrt möglich ist.

Zusätzlich zur alphanumerischen Anzeigeeinrichtung 2a, 2b ist gemäß einer weiteren Ausbaustufe eine Fotografiereinrichtung 5 im Heckbereich des Fahrzeugs 1 vorgesehen. Von dieser Fotografiereinrichtung 5 ist vorzugsweise nur die Linse von außen erkennbar, während der übrige Teil innerhalb des Kofferraumdeckels angeordnet ist. Im gezeigten Ausführungsbeispiel befindet sich die Fotografiereinrichtung 5 etwa in gleicher Höhe wie das Nummernschild und auf der linken Seite von diesem. Die Fotografiereinrichtung 5 ist gerade nach hinten auf das Folgefahrzeug 3, insbesondere auf dessen vorderes Kennzeichen, ausgerichtet und kann ebenfalls mittels eines in Reichweite des Fahrers vorgesehenen, nicht dargestellten Betätigungsglieds ausgelöst werden.

Weiterhin ist im Heckbereich des Fahrzeugs 1 eine Entfernungsmeßeinrichtung 6 vorgesehen, die aus einem nach hinten abstrahlenden Ultraschall-Laser oder Infrarotmeßgerät bestehen kann. Die Entfernungsmeßeinrichtung 6 ist im dargestellten Ausführungsbeispiel von der rückwärtigen Seite des Kofferraumdeckels zwischen dem sich auf der Beifahrerseite befindenden Rücklicht und dem Nummernschild derart angeordnet, daß die Entfernung a zwischen der auf der Beifahrerseite liegenden Außenseite des Fahrzeugs 1 und der Entfernungsmeßeinrichtung 6 etwa ein Viertel der gesamten Fahrzeugbreite beträgt. Diese außermittige Anordnung stellt sicher, daß die Meßergebnisse durch die gerade nach hinten abstrahlende Entfernungsmeßeinrichtung 6 nicht durch überholende Fahrzeuge beeinflußt werden, sondern daß nur Folgefahrzeuge 3, die in derselben Spur hinter dem vorausfahrenden Fahrzeug 1 fahren, von der Entfernungsmeßeinrichtung 6 erfaßt werden.

In Figur 2 sind die von der Entfernungsmeßeinrichtung 6 abgestrahlen Ultraschallwellen, Infrarotwellen bzw. Laserstrahlen mit dem Pfeil 7 schematisch dargestellt.

Um einerseits die Entfernungsmeßeinrichtung 6 zu schützen und andererseits eine möglichst gefällige und unauffällige Integration im Fahrzeug 1 zu ermöglichen, wird die Entfernungsmeßeinrichtung 6 zweckmäßigerweise an der Innenseite des Kofferraumdeckels befestigt, wobei im wesentlichen nur die hintere Stirnseite mit der Austrittsöffnung für die Ultraschall-/Infrarotwellen oder Laserstrahln von außen sichtbar ist. In diesem Fall ist es lediglich erforderlich, eine relativ kleine Öffnung auf der Rückseite des Kofferraumdeckels vorzusehen.

Die Entfernungsmeßeinrichtung 6 ist mit einem nicht dargestellten elektronischen Rechner verbunden, der an einer beliebigen passenden Stelle innerhalb des Fahrzeuges 1 angeordnet sein kann. Die von der Entfernungsmeßeinrichtung 6 gemessenen Abstandswerte zum Folgefahrzeug 3 werden laufend dem Rechner zugeführt und mit vorher einprogrammierten Abstands-Sollwerten verglichen.

Die Entfernungsmeßeinrichtung 6 bietet in Verbindung mit dem elektronischen Rechner die Möglichkeit, daß vorher eingespeicherte Texte automatisch auf der alphanumerischen Anzeigeeinrichtung 2a, 2b angezeigt werden können, wenn vom Folgefahrzeug 3 ein bestimmter Sollabstand unterschritten wird, der in Abhängigkeit der gefahrenen Geschwindigkeit und ggf. zusätzlich auch der Straßenbedingungen (trocken, naß, schneeig/eisig) berechnet wird. Auch die Fotografiereinrichtung 5 kann mit dem Rechner und der Entfernungsmeßeinrichtung 6 verbunden sein, um ggf. automatisch das Folgefahrzeug 3 zu fotografieren. Auf dem Foto können der gemessene Abstand und die gefahrene Geschwindigkeit automatisch dokumentiert werden. Zweckmäßigerweise ist in Reichweite des Fahrers ein zusätzlicher Schalter vorgesehen, der ein Umschalten zwischen der manuellen Aktivierung der Anzeigeeinrichtung 2a, 2b und/oder Fotografiereinrichtung 5 einerseits und der automatischen Aktivierung mittels der Entfernungsmeßeinrichtung 6 und des Rechners andererseits ermöglicht.

Die Anzeige der alphanumerischen Artzeigeinrichtung 2a, 2b kann aus einem durchlaufenden Text bestehen.

Dem Fahrer des Fahrzeugs 1 wird vorzugsweise die Wirksamkeit der alphanumerischen Anzeigeeinrichtung 2a, 2b und/oder der Fotografiereinrichtung 5 über Signalanzeigemittel, beispielsweise in der Form von im Armaturenbrett eingebauten Lämpchen, angezeigt. Eine derartige Anzeige wird zweckmäßigerweise auch dann aktiviert, wenn der Fahrer den Druckknopfschalter für das Sichtbarmachen eines Schriftzuges auf der Anzeigeeinrichtung 2a, 2b betätigt, wobei das entsprechende Lämpchen im Druckknopfschalter integriert sein kann.

## Patentansprüche

1. Auffahrwarnsystem für Fahrzeuge, **gekennzeichnet durch** eine im Heckbereich des Fahrzeugs (1) an einer von einem Folgefahrzeug (3) aus gut sichtbaren Stelle angeordnete alphanumerische Anzeigeeinrichtung (2a, 2b), die durch ein vom Fahrer betätigbares Schaltglied derart aktivierbar ist, daß dem Fahrer des Folgefahrzeugs (3) eine Textmitteilung angezeigt wird.

2. Auffahrwarnsystem nach Anspruch 1, **dadurch gekennzeichnet**, daß die Textmitteilung einen vorprogrammierten Text umfaßt.

3. Auffahrwarnsystem nach Anspruch 1 oder 2, **dadurch gekennzeichnet**, daß die alphanumerische Anzeigeeinrichtung (2a, 2b) mit einer vom Fahrzeuginneren aus bedienbaren Eingabeeinrichtung verbunden ist, mit der die Textmitteilung variierbar ist.

4. Auffahrwarnsystem nach einem der vorhergehenden Ansprüche, **dadurch gekennzeichnet**, daß das Schaltglied aus einem im Bereich des Armaturenbretts oder Lenkrads angeordneten Druckknopfschalter besteht.

5. Auffahrwarnsystem nach einem der vorhergehenden Ansprüche, **dadurch gekennzeichnet**, daß im Heckbereich des Fahrzeugs eine nach hinten auf ein Folgefahrzeug (3) zielende Fotografiereinrichtung (5) angeordnet ist, die mittels eines in Reichweite des Fahrers vorgesehenen Betätigungsglieds auslösbar ist.

6. Auffahrwarnsystem nach einem der vorhergehenden Ansprüche, **dadurch gekennzeichnet**, daß die alphanumerische Anzeigeeinrichtung (2a, 2b) und/oder Fotografiereinrichtung (5) mit einer im Heckbereich des Fahrzeugs (1) angeordneten, nach hinten auf das Folgefahrzeug gerichteten Entfernungsmeßeinrichtung (6) zur Messung des Abstandes zwischen dem Fahrzeug (1) und dem Folgefahrzeug (3) und mit einem elektronischen Rechner verbunden ist, der die Anzeigeeinrichtung (2a, 2b) und/oder Fotografiereinrichtung (5) aktiviert, wenn der von der Enfernungsmeßeinrichtung (6) gemessene Abstand zum Folgefahrzeug (3) einen bestimmten Sollwert unterschreitet.
